# NEUE EUROPÄISCHE PATENTSCHRIFT

(11) **EP 1 040 155 B2**
(45) Veröffentlichungstag und Bekanntmachung des Hinweises auf die Entscheidung über den Einspruch: **01.12.2010**
(45) Hinweis auf die Patenterteilung: 14.05.2003
(21) Anmeldenummer: 98965772.1
(22) Anmeldetag: 05.12.1998
(51) Int. Cl.: C08J 5/22, H01M 8/10, H01M 8/02, C25B 9/00

(54) **VERFAHREN ZUR HERSTELLUNG EINER MEMBRAN ZUM BETRIEB VON BRENNSTOFFZELLEN UND ELEKTROLYSEUREN**
METHOD FOR PRODUCING A MEMBRANE USED TO OPERATE FUEL CELLS AND ELECTROLYZERS
PROCEDE DE PRODUCTION D'UNE MEMBRANE UTILISEE POUR FAIRE FONCTIONNER DES PILES A COMBUSTIBLE ET DES ELECTROLYSEURS

(30) Priorität: 08.12.1997 DE 19754305
(43) Veröffentlichungstag der Anmeldung: 04.10.2000
(73) Patentinhaber: BASF Fuel Cell GmbH, 65926 Frankfurt am Main (DE)
(72) Erfinder: SOCZKA-GUTH, Thomas, D-65719 Hofheim (DE); BAURMEISTER, Jochen, D-60529 Frankfurt (DE); FRANK, Georg, D-72074 Tübingen (DE); KNAUF, Rüdiger, D-65719 Hofheim (DE)
(74) Vertreter: Luderschmidt, Schüler & Partner
(86) Internationale Anmeldenummer: PCT/EP1998/007919
(87) Internationale Veröffentlichungsnummer: WO 1999/029763

(56) Entgegenhaltungen:
- EP-A- 0 008 895
- EP-A- 0 417 908
- EP-A- 0 574 791
- EP-A- 0 575 807
- EP-A- 0 688 824
- WO-A-96/29359
- DE-A- 3 321 860
- DE-A- 3 402 471
- DE-A- 4 211 266
- DE-A- 10 207 411

## Beschreibung

Gegenstand der Erfindung sind Membranen aus sulfonierten Polyetheretherketonen (sPEEK), die auf Grund einer besonderen Kombination verschiedener Parameter insbesondere für den Einsatz in Brennstoffzellen oder Elektrolyseuren tauglich sind.

Per- oder teilflourierte Sulfonsäuregruppen-tragende Polymere sind aus der Literatur hinreichend bekannt. Für elektrochemische Zwecke geeignete. Membranen aus diesen Polymeren sollen gute Membranstabilitäten, ausreichende chemische Stabilität unter den Betriebsbedingungen von Brennstoffzellen und Elektrolyseuren und hohe Werten für die Protonenleitfähigkeit aufweisen (A. E. Steck in Materials For Fuel Cell Systems I, Proc. Int. Symp. On New Materials for Fuel Cell Systems, O. Savadogo, P.R. Roberge, T.N. Veziroglu, Montreal 1995, S. 74-94).
Allerdings sind Membranen aus diesen Polymeren durch die notwendigen Fluorierungsschritte bei dem Monomeren teuer und lassen sich zudem nur schwer verarbeiten. Dadurch können bei fluorierten Materialien z.B. nicht oder nur mit großem Aufwand dünne Membranen (< 50 µm) hergestellt werden, wodurch das Wassermanagement in diesen Membranen erschwert wird.
Eine Wiederverwertung der Polymere ist durch die schwierige Handhabung dieser Stoffe, besonders durch deren Schwerlöslichkeit, erschwert oder gar unmöglich.

Die Herstellung sulfonierter Polyetheretherketone wird z.B. in EP-A- 0 008 895 und EP-A-0 575 807 wie auch in Polymer, Vol. 35, 1994, Seite 5491-5497 beschrieben.

Die Verwendung von Polyetherketonen in Brennstoffzellen wird z.B. in WO 96/29359 beschrieben. Konkrete Hinweise, welche der beschriebenen Polyetheretherketone unter Brennstoffzellenbedingungen überhaupt tauglich und somit wirtschaftlich interessant sind, werden im Stand der Technik allerdings nicht gegeben.

Auch wird in der aktuellen Literatur häufig immer noch die Einsetzbarkeit nichtperfluorierter Materialien bestritten. Bisher lagen die Betriebsdauern, die mit solchen Materialien in Brennstoffzellen erreicht werden konnten bei maximal 600 Stunden ( A. E. Steck in "New Materials For Fuel Cell Systems 1", Proc. Of the 1^{st} Intern. Symp. On New Materials For Fuel Cell Systems, Montreal 1995, S. 82).

Aufgabe der vorliegenden Erfindung ist es daher, Membranen aus sulfonierten Polyetheretherketonen zur Verfügung zu stellen, die auf Grund ihrer chemischen und physikalischen Eigenschaften und ihrer hohen Langzeitstabilität für den Einsatz in Brennstoffzellen besonders geeignet sind. Ferner stellen die erfindungsgemäßen Membranen einen preiswerten und umweltfreundlichen Ersatz zu Membranen aus fluorierten Materialien.

Die vorliegende Erfindung betrifft somit Membranen, die sich insbesondere für den Einsatz in Polymerelektrolyt-Brennstoffzellen oder Elektrolyseuren eignet, enthaltend ein sulfoniertes aromatisches Polyetheretherketon der allgemeinen Formel (I) 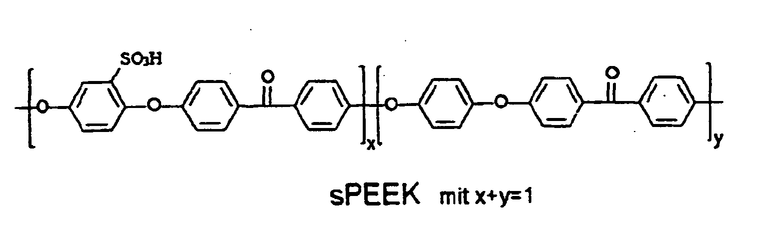 dadurch gekennzeichnet, daß das lonen-Austausch-Äquivalent (I.E.C.) des sulfonierten Polyetheretherketons im Bereich von 1,35 bis 1,95 mmol (-SO₃H)/ g (Polymer), vorzugsweise im Bereich von 1,50 bis 1,75 mmol (-SO₃H)/ g (Polymer), liegt das E-Modul der Membran im nassen Zustand nicht unter 100 N/mm² beträgt und das Molekulargewicht M_{w} des sulfonierten Polymers der Formel (I) im Bereich von 100 000 bis 310 000 g/mol (bestimmt durch PC: NMP, 0,05% LiCI-Zusatz, 60°C) liegt.

Überraschend wurde gefunden, daß für sulfonierte Polyetherketone, die für die Anwendung in elektrochemischen Zellen, wie z.B. Brennstoffzellen oder Elektrolysezellen, geeignet sein sollen, hinsichtlich verschiedener chemischer und physikalischer Parameter, wie z.B. das Molekulargewicht oder den Sulfonierungsgrad, sehr enge Grenzen eingehalten werden müssen.

Einen wesentlichen Parameter stellt das Molekulargewicht des verwendeten Polymeres dar. Durch die Sulfonierung des Stammpolymeren und die damit verbundene Überführung in einen Ladung tragenenden Polyelektrolyten kommt es zu einer teilweisen Entknäulung (s. B. Vollmert, Molecular Heterogeneties in Polymers and Association of Macromolecules, IUPAC Symposium Marienbad, Pure and Appl. Chem. 43, 183-205, 1975 und M. Hoffmann, Die Verhakung von Fadenmolekülen und ihr Einfluß auf die Eigenschaften von Polymeren, Prog. Colloid. Pol. Sci. 66, 73-86, 1979) des Polymeren durch die gegenseitige Abstoßung der Ladungszentren am Polymerrückrat.

Die erfindungsgemäßen Membranen enthalten sulfonierte Polymere mit einem Molekulargewicht Mw im Bereich von 100 000 g/mol bis 310 000 g/mol, vorzugsweise 100 000 bis 240 000 g/mol (bestimmt in NMP (N-Methylpyrollidon), 0.05 % Lithiumchlorid-Zusatz, 60 °C, PS-Eichung, Waters-Säule durch GPC). Zu kleine Molekulargewichte äußern sich in ungenügenden mechanischen Eigenschaften der Membranen; zu große Molekulargewichte erfordern bei der Sulfonierung große Verdünnungen, um die Viskosität in einem geeignetem Rahmen zu halten. Große Verdünnungen sind wegen des erhöhten Schwefelsäureverbrauches unwirtschaftlich (siehe auch Vergleichsbeispiel mit Mw= 390 000 Tabelle 2). Bei Polymeren mit zu hohen Molekulargewichten muß die Konzentration vor der Sulfonierung drastisch gesenkt werden, da sich die Lösungen ansonsten nicht weiterverarbeiten lassen.

Die zur Herstellung der erfindungsgemäßen Membranen eingesetzten Polymere weisen im trocknen Zustand ein Elastizitäts-Modul (E-Modul) größer gleich 1300 N/mm² und eine Bruchdehnung im trocknem Zustand nach vierstündiger Aufbewahrung im Klimaschrank bei 23 °C und 50 % rel. Luftfeuchte von ≥ 20% (Dicke 40 µm), bevorzugt ≥ 70%, insbesondere bis zu 150 % auf. Aufgrund des hohen E-Moduls im trocknen Zustand besitzen die erfindungsgemäßen Membranen eine ausreichende Bruchdehnung, was ein wichtiges Kriterium für eine gute Weiterverarbeitbarkeit darstellt.

Im nassen Zustand darf das E-Modul der Membranen nicht unter 100 N/mm² sinken, um auch im befeuchteten Zustand eine Mindestfestigkeit der Membran bzw. Membran-Elektroden-Einheit sicherzustellen.

Ein weiteres wichtiges Kriterium, das erfüllt sein muß, um erfindungsgemäß besonders leistungsfähige Membranen zu erhalten, ist der Sulfonierungsgrad der Polymere. Unter Sulfonierungsgrad versteht man den Anteil der sulfonierten Wiederholungseinheiten im Verhältnis zur Gesamtanzahl der Wiederholungseinheiten. Diesem Wert proportional ist das Ionen-Austausch-Äquivalent ( I.E.C.), das in Millimol Sulfonsäuregruppen pro Gramm Polymer ausgedrückt wird. Der Kehrwert des I.E.C. wird als Äquivalentgewicht bezeichnet und üblicherweise in Gramm Polymer pro Mol Sulfonsäuregruppen angegeben. Der I.E.C. wird aus dem durch Elementaranalyse bestimmten Verhältnis von Kohlenstoff zu Schwefel errechnet.

Polyetheretherketone, die sich für die erfindungsgemäßen Membranen eignen, besitzen ein lonen-Austausch-Äquivalent des sulfonierten Polyetherketons im Bereich von 1,35 bis 1,95, insbesondere von 1,50 bis 1,75 mmol (-SO3H)/g(Polymer).

Ist der I.E.C.-Wert höher, so können sich eine Vielzahl von Problemen ergeben. Bei einem Sulfonierungsgrad, der nur unwesentlich über dem Optimum des angegebenen Sulfonierungsgrades liegt, ist bereits mit einer starken Quellung der Membran bei Kontakt mit Wasser zu rechnen. Dieses Quellverhalten beeinträchtigt den Membran-Elektrodenverbund stark (s.o. angesprochene Festigkeit im nassen Zustand). Liegt der Sulfonierungsgrad über der angegebenen Obergrenze, so ist das synthetisierte Polymer in Kontakt mit Wasser mechanisch nicht beständig genug oder sogar bereits ganz oder teilweise - besonders bei Temperaturen oberhalb von 50 °C wasserlöslich, was sich auch in einem E-Modul unter 100 N/mm² zeigt.

Mit zunehmendem Sulfonierungsgrad steigt allerdings die wesentlichste Kenngröße einer protonenleitenden Membran, die Protonenleitfähigkeit, kontinuierlich an, was sich in einer höheren Leistung (W/cm²) einer höher sulfonierten Membran widerspiegelt. Daher ist es besonders schwierig ein gutes Gleichgewicht zwischen einem möglichst hohen Sulfonierungsgrad, ohne, daß das enthaltene Polymer (mit Wasser) eine zu hohe Löslichkeit und eine zu kleine mechanische Festigkeit aufweist, und einer möglichst hohen Protonenleitfähigkeit zu finden. Bereits ein I.E.C. von 1.30 spiegelt sich in einer sehr geringen Leistung der Brennstoffzelle wieder (siehe erstes Beispiel in Tabelle 1).

Die für die erfindungsgemäßen Membranen verwendeten sulfonierten Polymere besitzen, in Kontakt mit reinem Wasser gemessen, bei Raumtemperatur eine Protonenleitfähigkeit von > 3x10⁻³ S/cm, vorzugsweise > 2x10⁻² S/cm, insbesondere bis zu 300 mS/cm.

Mit den erfindungsgemäßen Membranen, enthaltend sulfonierte aromatische Polyetherketone der Formel (I), lassen sich Betriebsdauern von mindestens 1000 Stunden, insbesondere von ≥ 3000 Stunden, vorzugsweise ≥ 4000 Stunden, problemlos auch mit einem nicht-perfluorierten Material realisieren.

### Beispiele:

### 1) Herstellung des sulfonierten Polymeren

30 g getrocknetes Polyetherketon werden in 420 g konzentrierter Schwefelsäure bei etwa 5°C unter intensivem Rühren mit einer Zahnscheibe eingetragen.
Danach läßt man noch 30 Minuten weiterrühren und erhöht dann die Temperatur innerhalb von 45 Minuten bis auf 50°C.
Sobald der gewünschte Sulfonierungsgrad erreicht wird kühlt man die Lösung wieder bis auf 5°C ab und gießt sie langsam auf Eiswasser. Das Produkt wird mit entsalztem Wasser sulfatfrei (Test mit BaCl₂-Lösung) gewaschen, im Vakuumtrockenschrank getrocknet und gemahlen. Der Sulfonierungsgrad wird durch Elementaranalyse aus dem Kohlenstoff/Schwefelverhältnis errechnet.

### 2) Herstellung der Filme

Das gemahlene, trockene Polymer (Korngröße ca. 80 µm, Wassergehalt < 0.5 %) wird schnell in die entsprechende Menge NMP eingebracht und unter Inertgas bei 80°C unter Intensivem Rühren gelöst, so daß eine ca. 18 %ige Lösung entsteht.
Die noch heiße Lösung wird über ein Polypropylen-Vlies mit einer mittleren Maschenweite von 1 µm filtriert und noch am selben Tag auf Glasplatten ausgerakelt und in einem Staubfreien Umluftofen bei 80°C unter Normaldruck über Nacht getrocknet. Die Filme werden trocken von der Glasplatte abgezogen.

### Abbildungen 1 bis 5

Lebensdauertest einer sPEEK Membran mit einem Sulfonierungsgrad von 50% und einer Dicke von 40 µm über 4300 h beim Betrieb mit H₂/O₂ bei 50°C, drucklos.

Der Leistungsabfall bei 2700 Stunden und 3330 Stunden beruht auf dem Umstand, daß es bei der Versuchsdurchführung zweimal zu einem Ausfall der Gaszufuhr kam. Nach erneuter Gaszufuhr lieferte die Brennstoffzelle die gleiche Leistung wie zuvor.

**Tabelle 1:**

| Leistungsdaten für sPEEK | | | | |
|---|---|---|---|---|
| Die aufgeführten Polyetherketone wurden mit Hilfe einer Brennstoffzelle (Betriebsbedingungen: Zelltemperatur 45°C, Normaldruck bis max. 0,2 bar Überdruck, Befeuchtung an der Luftseite, selbst hergestellte Elektrode mit 0,2-0,3 mg Pt / cm²) vermessen. | | | | |

| Membran | IEC (mmol SO₃H/g Polymer) | Sulfonierungsgrad | Leistung 0,7 V | max. Leistung |
|---|---|---|---|---|
| sPEEK | 1,30 | 42 % | 34 mW | 52 mW bei 510 mV |
| sPEEK | 1,47 | 50 % | 222 mW | 386 mW bei 519 mV |
| sPEEK | 1,62 | 54 % | 290 mW | 560 mW bei 550 mV |
| sPEEK | 1,73 | 58 % | 278 mW | 523 mW bei 523 mV |
| sPEEK | 1,80 | 61 % | 235 mW | 389 mW bei 490 mV |
| sPEEK | 1,82 | 63 % | 229 mW | 342 mW bei 517 mV |

**Tabelle 2:**

| Reißfestigkeiten , E-Modul einer trockenen Folie (bei 23 °C, 50 % Luftfeuchte) und zugehörige Molekulargewichte nach PC in NMP | | | | | |
|---|---|---|---|---|---|
| Membran | Sulfonierungsgrad | E-Modul [N/^{mm}] | Reißdehnung | Molekulargewicht M_{w} | Molekulargewichts verteilung M_{w} /Mₙ |
| sPEEK | 42 % (1,30) | 1519 | 22 % | 154 000 | 2,90 |
| sPEEK | 50 % (1,47) | 1606 | 61 % | k.A. | k. A. |
| sPEEK | 54 % (1,62) | 1527 | 59 % | 176 000 | 2,20 |
| sPEEK | 58 % (1,73) | 1385 | 100 % | 203 000 | 2,94 |
| sPEEK | 61 % (1,80) | 713 | 112 % | 390 000 | 5,40 |

**Tabelle 3:**

| | | | | |
|---|---|---|---|---|
| Protonenleitfähigkeitsdaten und mechanische Eigenschaften werden in Wasser bei 23°C gemessen (Protonenleitfähigkeit gemessen mit einer 4-Pol-Anordnung bei einer Frequenz zwischen 30 und 3000 Hz, Phasenlage zwischen -1 und + 1 Hz). Es gelten die unter Tabelle 2) genannten Molekulargewichtsdaten. | | | | |
| Vorbehandlung der Membran zur Messung der Protonenleitfähigkeit: bei 40°C für 30 Minuten in 5 %iger Salpetersäure einlegen und danach mit destilliertem Wasser waschen. | | | | |
| Vorbehandlung der Membran zur Messung der mechanischen Eigenschaften: bei 40°C für 30 Minuten in 5 %iger Salpetersäure einlegen und danach mit dest. Wasser waschen. Bei 23°C und 50 % rel. Luftfeuchte 4 h trocknen und 30 Minuten bei 23°C wässern. | | | | |

| Membran | Sulfonierungsgrad (IEC) | E-Modul [N/^{mm}] | Reißdehnung | Protonenleitfähigkeit [mS/cm] |
|---|---|---|---|---|
| sPEEK | 42 % (1,30) | 730 | 107 % | 15 |
| sPEEK | 50 % (1,47) | k. A. | k. A. | 42 |
| sPEEK | 54 % (1,62) | 523 | 211 % | k. A. |
| sPEEK | 58 % (1,73) | 516 | 218 % | 57 |
| sPEEK | 61 % (1,80) | 180 | 281 % | 56 |
| k. A. keine Angaben vorhanden | | | | |

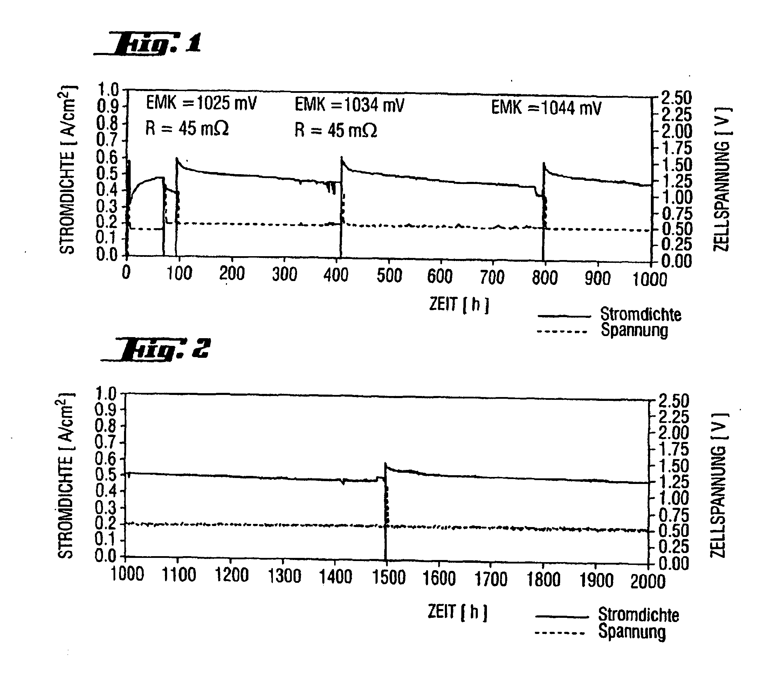

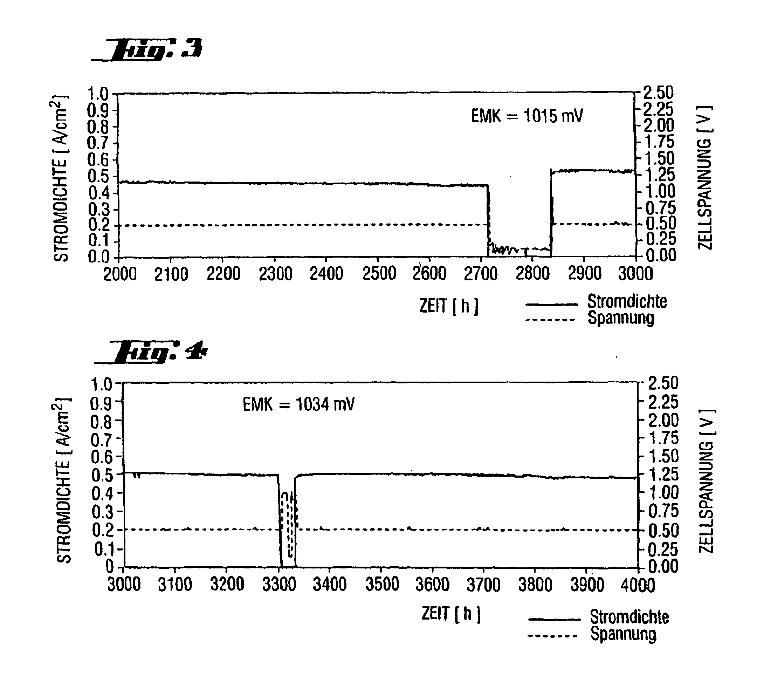

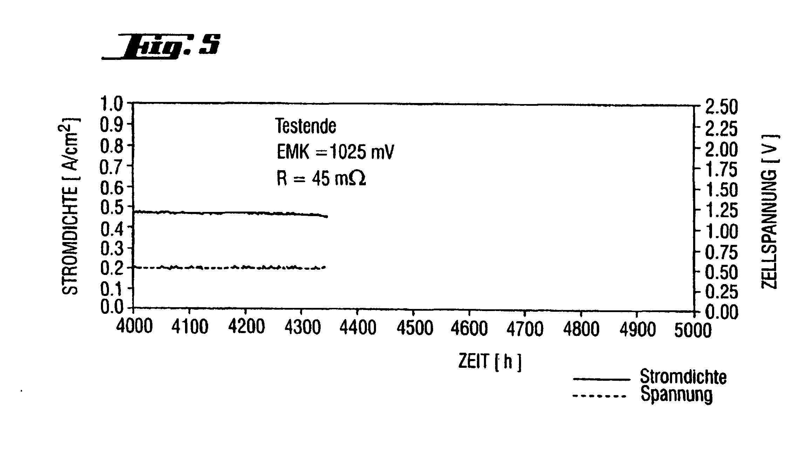

## Patentansprüche

1. Membran enthaltend ein sulfoniertes aromatisches Polyetheretherketon der allgemeinen Formel (I) 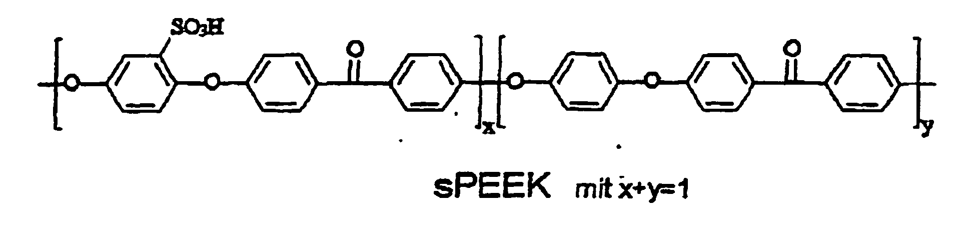 **dadurch gekennzeichnet, daß** das lonen-Austausch-Äquivalent (I.E.C.) des sulfonierten Polyetheretherketons im Bereich von 1,35 bis 1,95 mmol (-SO₃H)/g (Polymer) liegt, das E-Modul der Membran im nassen Zustand nicht unter 100 N/mm² beträgt und das Molekulargewicht M_{w} des sulfonierten Polymers der Formel (I) im Bereich von 100 000 bis 310 000 g/mol (bestimmt durch PC: NMP, 0,05% LiCI-Zusatz, 60°C) liegt.

2. Membran nach Anspruch 1, **dadurch gekennzeichnet, daß** das sulfonierte Polymer der Formel (I) im Kontakt mit reinem Wasser eine Protonenleitfähigkeit von > 3x10⁻³ S/cm besitzt.

3. Membran nach Anspruch 1 oder 2, **dadurch gekennzeichnet, daß** das E-Modul des Polymers der Formel (I) im trockenen Zustand > 1300 N/mm² ist.

4. Membran nach mindestens einem der Ansprüche 1 bis 3, **dadurch gekennzeichnet, daß** die Bruchdehnung des Polymers der Formel (I) im trockenen Zustand nach vierstündiger Aufbewahrung im Klimaschrank bei 23 °C und 50 % rel. Luftfeuchte > 20% ist.

5. Verwendung einer Membran nach mindestens einem der Ansprüche 1 bis 4 für den Einsatz in Brennstoff- oder Elektrolysezellen.

## Claims

1. A membrane, containing a sulphonated aromatic polyether ether ketone of the general formula (I) 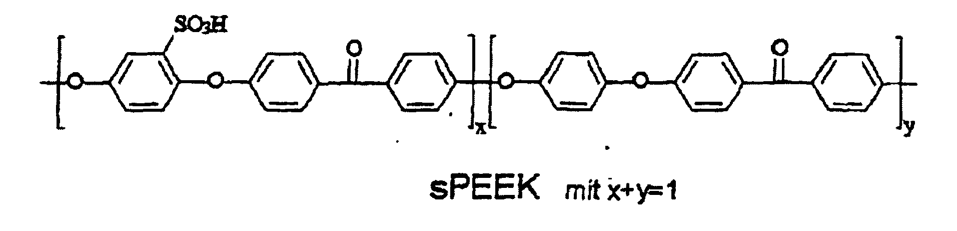 **characterized in that** the ion exchange capacity (IEC) of the sulphonated polyether ether ketone is in the range of from 1.35 to 1.95 mmol (-SO₃H)/g (polymer), the modulus of elasticity of the membrane in a wet state is not lower than 100 N/mm², and the molecular weight M_{w} of the sulphonated polymer of the formula (I) is in the range of from 100.000 to 310.000 g/mol (determined by PC: NMP, addition of 0.05% LiCl, 60°C).

2. The membrane according to claim 1, **characterized in that** the sulphonated polymer of the formula (I) possesses a proton conductivity of >3x10⁻³ S/cm when in contact with pure water.

3. The membrane according to claim 1 or 2, **characterized in that** the modulus of elasticity of the polymer of the formula (I) in a dry state is >1300 N/mm².

4. The membrane according to at least one of claims 1 to 3, **characterized in that** the elongation at break of the polymer of the formula (I) in a dry state is >20% after storage in a climatic cabinet at 23°C and a relative humidity of 50% for four hours.

5. Use of a membrane according to at least one of claims 1 to 4 for the application in fuel or electrolyte cells.

## Revendications

1. Membrane contenant un polyéther éther cétone sulfoné aromatique de la formule générale (I) 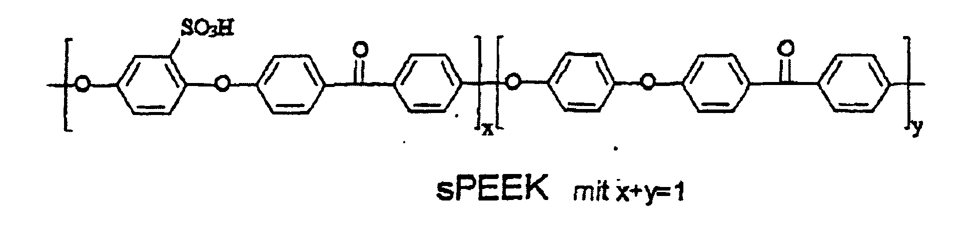 **caractérisé en ce que** la capacité d'échange d'ions (I.E.C) du polyéther éther cétone sulfoné est située entre 1,35 et 1,95 mmol (-SO₃H)/g (polymère), le module E de la membrane à l'état mouillé ne se trouve pas en dessous de 100 N/mm² et le poids moléculaire M_{w} du polymère sulfoné de la formule (I) est de 100 000 à 310 000 g/mol (déterminé par PC : NMP, ajout 0,05% LiCI, 60°C).

2. Membrane selon revendication 1, **caractérisée en ce que** le polymère sulfoné de la formule (I), en contact avec de l'eau pure, possède une conductivité de proton > 3x10⁻³ S/cm.

3. Membrane selon revendication 1 ou 2, **caractérisée en ce que** le module E du polymère de la formule (I) est > 1300 N/mm² à l'état sec.

4. Membrane selon au moins l'une des revendications 1 à 3, **caractérisée en ce que** l'allongement à la rupture du polymère de la formule (I), à l'état sec, après une conservation de quatre heures dans une armoire de climatisation à 23°C et 50% d'humidité relative de l'air, est > 20%.

5. Utilisation d'une membrane selon au moins l'une des revendications 1 à 4 pour l'application dans des cellules à combustible ou d'électrolyse.
